# EUROPÄISCHE PATENTSCHRIFT

(11) **EP 0 988 109 B1**
(45) Veröffentlichungstag und Bekanntmachung des Hinweises auf die Patenterteilung: **27.11.2002**
(21) Anmeldenummer: 98929433.5
(22) Anmeldetag: 09.06.1998
(51) Int. Cl.: B01J 35/04, F01N 3/28

(54) **METALLISCHER KATALYSATOR-TRÄGERKÖRPER ZUR REINIGUNG EINES ABGASSTROMES, INSBESONDERE VON EINEM KLEINMOTOR**
METALLIC CATALYST SUPPORT FOR PURIFYING AN EXHAUST GAS CURRENT, ESPECIALLY OF A SMALL ENGINE
SUPPORT METALLIQUE POUR CATALYSEUR D'EPURATION D'UN COURANT DE GAZ D'ECHAPPEMENT, EN PARTICULIER D'UN PETIT MOTEUR

(30) Priorität: 09.06.1997 DE 19724289
(43) Veröffentlichungstag der Anmeldung: 29.03.2000
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); KRUSE, Carsten, D-53797 Lohmar (DE); ZEHETNER, Johann, D-53797 Lohmar (DE)
(74) Vertreter: Kahlhöfer, Hermann, Dipl.-Phys.
(86) Internationale Anmeldenummer: EP9803452
(87) Internationale Veröffentlichungsnummer: WO98056503

(56) Entgegenhaltungen:
- EP-A- 0 152 560
- EP-A- 0 775 808
- WO-A-97/32119
- DE-A- 3 744 020
- DE-A- 4 209 195
- US-A- 5 470 364

## Beschreibung

Die Erfindung betrifft einen metallischen Katalysator-Trägerkörper zum Reinigen eines Abgasstromes gemäß Oberbegriff von Anspruch 1.

Derartige metallische Katalysator-Trägerkörper sind bekannt. Prinzipiell können die zur Reinigung eines Abgasstromes eines Verbrennungsmotors eingesetzten metallischen Katalysator-Trägerkörper in Axialkatalysatoren und Radialkatalysatoren unterschieden werden.

Axialkatalysatoren bekannter Bauart, wie sie z. B. in der US 4,842,954 beschrieben sind, weisen sich abwechselnde Lagen von glatten und gewellten Folien auf, welche zu einer paketartigen Wabenstruktur gewickelt sind. Diese Axialkatalysatoren weisen in der Regel einen äußeren Mantel auf und werden in axialer Richtung durchströmt, wobei ihre häufigste Bauform zylindrisch ist und der Abgasstrom an einer Eintrittsstirnseite zugeführt und an einer Austrittsstirnseite wieder abgeführt wird. Die einzelnen zwischen den Wellungen der gewellten Folie sich befindlichen Strömungskanäle sind dabei voneinander getrennt, so daß eine rein axiale Strömung im Katalysator-Trägerkörper auftritt. Zur Erhöhung der Effektivität derartiger Katalysatoren ist versucht worden, die Strömungsturbulenz in den Strömungskanälen zu erhöhen, indem Teile des durch die Wellen gebildeten Strömungskanals bezüglich seiner Längserstreckung seitlich versetzt angeordnet sind, wie es z. B. in der EP 0 152 560 B1 beschrieben ist. Aufgrund der paketartigen Lagenstruktur wird zwar der Abgasstrom in longitudinaler Richtung gestört, eine Strömungskomponente in radialer Richtung tritt aber weitestgehend nicht auf. Bei mit Kleinmotoren ausgerüsteten Geräten, wie z. B. Handsägen, Rasenmähern etc., ist der Platz für Axialkatalysatoren nicht immer vorhanden. Der Einsatz von Axialkatalysatoren würde demzufolge zu einer unerwünschten Vergrößerung des Abgasstranges führen.

Ein Radialkatalysator ist beispielsweise aus der WO 96/09893 bekannt. Der bekannte, den Katalysator-Trägerkörper darstellende Wabenkörper ist aus aneinanderliegenden Scheiben aufgebaut, in welche Kanäle eingearbeitet sind, welche vom Abgasstrom radial durchströmt werden. Die Stirnseiten eines solchen scheibenweise aufgebauten Wabenkörpers sind geschlossen. Zwar kann mit einem derartigen Radialkatalysator dessen Einbaulänge verringert werden, die Strömungswege des Abgasstromes durch die von der Wabenstruktur gebildeten Kanäle sind jedoch in ihrer Länge begrenzt, da bei radialer Abführung des Abgasstromes aus dem Katalysator die äußeren Abmessungen des Gehäuses des Abgassystems, in welchem der eigentliche Katalysator-Trägerkörper eingebaut ist, ohnehin relativ groß sind. Um die Effektivität derartiger Katalysatoren zu erhöhen, sind daher auch längere Strömungswege erforderlich. Die. längeren radialen Strömungswege stehen jedoch nicht im Einklang mit der Forderung nach Kompaktheit, wie es insbesondere bei Geräten, welche mit Kleinmotoren ausgerüstet sind, der Fall ist. Dabei ist zu berücksichtigen, daß der Einsatz von Katalysatoren bei mit Verbrennungsmotoren versehenen Arbeitsgeräten aus gesundheitlichen und Umweltgesichtspunkten eine zunehmende Bedeutung erlangt.

Eine Möglichkeit, wie längere Strömungswege erzielt werden können, geht aus der DE-A-3744020 hervor. Dort ist eine Vorrichtung für die katalytische Behandlung von Verbrennungsabgasen eines Kraftfahrzeugmotors beschrieben. Zur Schaffung einer vergrößerten, makroskopisch katalytisch wirksamen Oberfläche wird dort vorgeschlagen, den Katalysator-Trägerkörper aus Meta1lbände herzustellen, welche Verbindungskanäle bildende Ausstanzungen aufweisen- Auf diese Weise wird der den Katalysator-Trägerkörper durchströmende Abgasstrom mehrfach umgelenkt, wobei schließlich der gesamte zu reinigende Abgasstrom an einer Stirnseite eintritt und an der gegenüberliegenden Stirnseite wieder austritt.

Allerdings wird die Baugröße und die Effektivität infolge der im wesentlichen axialen Durchströmung des Katalysator-Trägerkörpers nicht entscheidend verbessert. Die Effektivität kann deshalb nicht über die Maßen gesteigert werden, da sich wegen der zum Axialkatalysator analogen Strömungsrichtung eine nahezu gleiche Wärmeverteilung innerhalb des Katalysator-Trägerkörpers ausbildet. Dies kann zur Ausbildung sogenannter Hotspots führen, in denen bereits frühzeitig eine katalytische Umsetzung von im Abgas enthaltenen Schadstoffen erfolgt, welche jedoch bei längerer Betriebsdauer einer enormen thermischen Beanspruchung unterliegen.

Die Aufgabe der Erfindung besteht hiervon ausgehend darin, einen Katalysator-Trägerkörper zu schaffen, welcher insbesondere zur Reinigung eines Abgasstromes von einem Kleinmotor geeignet ist und welcher bei geringer Baugröße, hoher Kompaktheit, hoher Reinigungskapazität und Reinigungsefiektivität einfach und kostengünstig herstellbar ist und an unterschiedliche Raumverhältnisse in einem Gehäuse gut anpaßbar ist.

Diese Aufgabe wird mit einem metallischen Katalysator-Trägerkörper mit den Merkmalen gemäß Anspruch 1 gelöst. Zweckmäßige Weiterbildungen sind in den abhängigen Ansprüchen definiert.

Gemäß der Erfindung weist der metallische Katalysator-Trägerkörper zum Reinigen eines Abgasstromes, insbesondere von einem Kleinmotor, eine Längsachse und eine Vielzahl von. Fluidströmungswegen in seinem Inneren auf. Diese Fluidströmungswege sind dabei so ausgebildet, daß der Abgasstrom im Katalysator-Trägerkörper beim Eintritt insgesamt so umgelenkt wird, daß er zumindest eine Strömungskomponente erhält, welche senkrecht zu der Längsachse des Katalysator-Trägerkörpers ausgerichtet ist. Das bedeutet, daß der Abgasstrom beim Eintritt in den Katalysator-Trägerkörper insgesamt umgelenkt wird und ihm daher insgesamt eine zur Längsachse senkrechte Strömungskomponente aufgeprägt wird. Zumindest ein Teilstrom des Abgasstromes wird anschließend durch eine entsprechende Gestaltung der Fluidströmungswege nochmalig umgelenkt, und zwar derart, daß zumindest dieser Teilstrom mit zumindest einer Strömungskomponente in Richtung der Längsachse durch eine Fluidaustrittsfläche aus dem Katalysator-Trägerkörper. austritt. Dabei sind die Strömungswege so ausgebildet, daß der Abgasstrom mit jeweils einem Teilstrom an beiden Stirnseiten aus der Fluidaustrittsfläche abströmt. Bei dieser Ausgestaltung sind die Strömungswege im Inneren des Katalysator-Trägerkörpers von einem zentralen Bereich nach der entsprechenden Umlenkung aus der Richtung senkrecht zur Längsachse in Richtung der Längsachse in entgegengesetzte Richtungen zu den Stirnseiten der Fluidaustrittsfläche geführt. Vorzugsweise tritt der Abgasstrom an den beiden Stirnseiten mit gleich großen Teilströmen aus.

Dadurch, daß der Abgasstrom beim Eintritt in den Katalysator-Trägerkörper eine senkrechte Strömungskomponente erhält, d. h., der Katalysator-Trägerkörper zumindest in diesem Bereich als Radialkatalysator ausgebildet ist, und dadurch, daß zumindest ein Teilstrom des Abgasstromes anschließend nochmals so infolge der entsprechend der ausgebildeten Fluidströmungswege umgelenkt wird, daß dieser Teilstrom des Abgasstromes zumindest eine in Richtung der Längsachse ausgerichtete Strömungskomponente aufweist, d. h., der Katalysator-Trägerkörper in diesem Bereich als Axialkatalysator wirkt, werden die Vorteile eines Radialkatalysators und eines Axialkatalysators vereinigt. Dadurch wird ein metallischer Katalysator-Trägerkörper geschaffen, welcher eine hohe Kompaktheit bei geringer Baugröße eine hohe Reinigungskapazität und Reinigungseffektivität besitzt und welcher darüber hinaus auch kostengünstig herstellbar ist. Dadurch ist es möglich, die mit einem Kleinmotor versehenen Arbeitsgeräte mit Katalysatoren auszurüsten, welche vor allem auch beim Kurzzeitbetrieb effektiv sind und ökologisch sowie gesundheitsmäßig gestiegenen Anforderungen gerecht werden, ohne den Preis eines derartigen Arbeitsgerätes oder seiner Abmessungen wesentlich zu erhöhen. Ein erfindungsgemäßer Katalysator-Trägerkörper ist in seinen Dimensionen auch leicht gegebenen Einbauverhältnissen anzupassen.

Gemäß einem bevorzugten Ausführungsbeispiel weist der metallische Katalysator-Trägerkörper einen inneren hohlen Bereich auf, welcher die Längsachse umgibt und welcher durch eine Fluideintrittsfläche am Katalysator-Trägerkörper begrenzt ist. Über diesen hohlen, die Längsachse umgebenden Bereich wird der Abgasstrom dem Inneren des Katalysator-Trägerkörpers zugeführt und tritt über die Fluideintrittsfläche in die Fluidströmungswege innerhalb des Katalysator-Trägerkörpers ein. Die Fluideintrittsfläche kann insbesondere auch, was bei Radialkatalysatoren sehr günstig für die gleichmäßige Strömungsverteilung ist, in Strömungsrichtung etwa trichterförmig, d. h. sich konisch verjüngend, ausgebildet sein.

Gemäß einem weiteren bevorzugten Ausführungsbeispiel strömt der Abgasstrom nach dem Eintritt in die Fluideintrittsfläche von innen radial nach außen, und zumindest ein Teilstrom des Abgasstromes strömt anschließend axial stirnseitig durch die Fluidaustrittsfläche ab. Das bedeutet, daß die Fluidaustrittsfläche sowohl von Stirnseiten des Katalysator-Trägerkörpers als auch von dessen restlicher äußerer Oberfläche gebildet ist. Durch die Gestaltung der Strömungswege im Inneren des Katalysator-Trägerkörpers derart, daß der Abgasstrom zunächst radial in den Strömungswegen geführt ist, anschließend jedoch durch entsprechend umgelenkte Strömungswege im Katalysator-Trägerkörper axial geführt ist, so daß dieser stirnseitig durch die Fluidaustrittsfläche abströmt, können die ansonsten für einen reinen Radialkatalysator erforderlichen relativ großen Abmessungen senkrecht zu der Längsachse des Katalysator-Trägerkörpers, d. h. in radialer Richtung, verringert werden, so daß die Strömungswege im Inneren eines erfindungsgemäßen Katalysator-Trägerkörpers verlängert werden. Außerdem erhöhen die vielen verzweigten Strömungswege die Effektivität des Katalysators bei gleichzeitig geringem Druckverlust. Je nach Bauart können sich zusätzlich gute schalldämpfende Eigenschaften ergeben.

Vorzugsweise sind gemäß einem weiteren bevorzugten Ausführungsbeispiel der Erfindung die Strömungswege so ausgebildet, daß ein Restabgasstrom, welcher sich aus der Differenz des dem Katalysator-Trägerkörpers zugeführten Gesamtabgasstromes und dem axial abströmenden Teilstrom ergibt, radial aus der Fluidaustrittsfläche abströmt. Somit weist ein Katalysator-Trägerkörper gemäß diesem Ausführungsbeispiel in seinem Inneren Strömungswege auf, welche den Abgasstrom in einem bestimmten Teilstrom, welcher den beiden bzw. einer Stirnseite der Fluidaustrittsfläche zugeführt wird, und den sich ergebenden Restabgastrom aufteilen, welcher radial der restlichen äußeren Fluidaustrittsfläche zugeführt wird.

Gemäß einem bevorzugten Ausführungsbeispiel weist der Katalysator-Trägerkörper Folien mit einer Vielzahl von Löchern auf, deren Ränder kragenartig bzw. trichterförmig ausgeformt sind. Diese Kragen bzw. Trichter werden bei der Herstellung der Vielzahl von Löchern in den Folien dadurch erzeugt, daß die Löcher nicht durch herkömmliches Bohren sondern durch Verfahren hergestellt werden, welche sicherstellen, daß das aus dem eigentlichen Lochbereich zu entfernende Material der Folie in der Art eines Tiefziehvorganges zu einem vorstehenden Rand ausgezogen wird. Vorzugsweise bilden diese Ränder bei zu einem Paket übereinandergelegten Folien die Distanzhalter, wobei der kragenartig ausbildende, von der Folie wegweisende Rand, eine solche Form aufweist, daß bei übereinandergelegten Folien der Rand nur mit seinem am weitesten von der Folienoberfläche entfernten Bereich die Distanz definiert und zwischen dem restlichen Rand und der darübergelegten Folie Strömungszwischenräume gebildet sind. Durch diese Strömungszwischenräume wird der dem Katalysator-Trägerkörper vom Inneren her radial zugeführte Abgasstrom in axialer Richtung, d. h. zumindest ein Teilstrom davon, geführt.

Damit ergeben sich beim Strömen des Abgases durch den Katalysator-Trägerkörper längere Strömungswege, welche eine intensivere katalytische Reaktion mit dem auf der Oberfläche der Folien entsprechend aufgebrachten Katalysator gewährleisten.

Gemäß einem weiteren bevorzugten Ausführungsbeispiel besteht der Katalysator-Trägerkörper aus streifenförmig ausgebildeten Folien, in welche Öffnungen eingearbeitet sind. Die Folien sind an voneinander beabstandeten Verbindungsstellen fest miteinander verbunden. Die Verbindung kann dabei in an sich bekannter Weise durch Verfahren wie Schweißen, Kleben, Löten erzeugt werden. Wird ein aus derartigen streifenförmig ausgebildeten Folien bestehender paketartiger Wabenkörper gestreckt, so ergibt sich eine Wabenstruktur, welche einerseits Strömungskanäle nur in radialer Richtung und andererseits, bedingt durch die Öffnungen, Strömungskanäle mit zumindest axialen Strömungsrichtungskomponenten aufweist. Die das Paket bildenden hintereinander angeordneten Folien sind, wobei die Verbindungsstellen hintereinander angeordneter Folien alternierend zueinander versetzt sind. Vorzugsweise sind die Verbindungsstellen, welche vorzugsweise über die Breite der Folie reichen, linienförmig ausgebildet. Durch linienförmig ausgebildete Verbindungsstellen ist eine hohe Streckfähigkeit möglich, welche insbesondere dann eine Rolle spielt, wenn eine solche schichtartige Folienpaketstruktur zu einem im wesentlichen zylindrischen Hohlkörper geformt ist.

Es ist jedoch auch möglich, daß die Verbindungsstellen über die Breite der Folie schräg verlaufen. Dadurch ergeben sich beim Strecken der Folienpaketstruktur schräg verlaufende Strömungskanäle. Diese schräg verlaufenden Strömungskanäle besitzen sowohl eine radiale Strömungskomponente als auch eine axiale Strömungskomponente.

Gemäß einem weiteren bevorzugten Ausführungsbeispiel sind die Verbindungsstellen der streifenförmig ausgebildeten Folien flächenförmig ausgebildet. Bei flächenförmigen Verbindungsstellen sind die beim Strecken durch das Folienpaket aufnehmbaren Kräfte größer als bei lediglich linienförmigen Verbindungsstellen. Vorzugsweise sind die Verbindungsstellen im wesentlichen dreiecksförmig oder trapezförmig ausgebildet. Das hat den Vorteil, daß beim Wickeln des Folienpaketes zu einem im wesentlichen zylindrischen Hohlkörper, eine ansonsten auftretende Wölbung in der äußeren Mantelfläche des Hohlkörpers vermeidbar ist.

Vorzugsweise sind die Verbindungsstellen der Folien geklebt, gelötet oder geschweißt, vorzugsweise ultraschall-geschweißt.

Gemäß einem weiteren bevorzugten Ausführungsbeispiel ist der metallische Katalysator-Trägerkörper zumindest einer mit Wellen ausgebildeten Folie versehen, welche eine Vielzahl von aus den Wellen vorstehenden Strukturen aufweist. Diese Strukturen erstrecken sich im wesentlichen in Richtung der Längsachse des Katalysator-Trägerkörpers und bilden senkrecht dazu Durchströmquerschnitte. Dadurch sind Strömungsrichtungen sowohl quer zur Längsachse des Katalysator-Trägerkörpers als auch in Richtung seiner Längsachse realisierbar. Derartige aus gewellten Folien mit entsprechend von den Wellen vorstehenden Strukturen versehenen Katalysator-Trägerkörper werden auch als Katalysator-Trägerkörper mit Longitudinal-Strömungselementen bezeichnet. Vorzugsweise sind die Strukturen regelmäßig angeordnet und bezüglich der sich in Längsrichtung des Katalysator-Trägerkörpers erstreckenden Wellen versetzt angeordnet. Diese Strukturen sind ähnlich den für Wärmeübertrager eingesetzten Wirbelzellen.

Gemäß noch einem weiteren bevorzugten Ausführungsbeispiel ist der Katalysator-Trägerkörper aus Streckmetall aufgebaut, welches zur Bildung einer paketartigen Struktur mehrfach übereinandergelegt ist. Durch das mehrfache Übereinanderlegen verschiedener Schichten des Streckmetalls, was paketweise oder durch Wickeln erfolgen kann, ergibt sich eine paketartige Struktur mit Strömungskanälen in eine Richtung senkrecht zur Längsachse sowie auch in eine Richtung koaxial zu dieser Längsachse. Das ist vor allen Dingen dadurch der Fall, daß Streckmetall bekanntlich, nachdem es dem eigentlichen Streckvorgang ausgesetzt wurde, nicht mehr vollständig eben ist. Dadurch bilden sich beim Übereinanderlegen mehrerer Lagen des Streckmetalls Zwischenräume aus, welche Strömungswege definieren, welche zumindest eine axiale Strömungskomponente des Abgasstromes gewährleisten.

Gemäß noch einem weiteren bevorzugten Ausführungsbeispiel besteht der metallische Katalysator-Trägerkörper aus Draht, welcher zur Bildung einer paketartigen Struktur mit wechselnder Richtungsänderung übereinandergelegt ist. Vorzugsweise ist der Draht dabei im wesentlichen regelmäßig übereinandergelegt, so daß ein spulen- bzw. knäulartiger Katalysator-Trägerkörper in Form einer paketartigen Struktur mit regelmäßig angeordneten Strömungskanälen ausgebildet ist. Durch das häufige mit wechselnder Richtungsänderung versehene Übereinanderlegen eines Drahtes zu einem paketartigen Knäul entstehen im Inneren des Katalysator-Trägerkörpers Strömungswege, welche radial gerichtet sind, oder zumindest eine radiale Strömungskomponente des Abgasstromes gewährleisten, sowie Strömungswege, welche axial gerichtet sind, oder zumindest eine axiale Strömungskomponente des Abgasstromes gewährleisten.

Die Katalysator-Trägerkörper gemäß den beschriebenen Ausführungsbeispielen der Erfindung vereinigen einerseits die Vorteile sowohl der Radialkatalysatoren als auch der Axialkatalysatoren, indem die Strömungswege des Abgasstromes im Inneren des Katalysator-Trägerkörpers bei gegebener Baugröße verlängert werden, und weisen darüberhinaus den Vorteil auf, daß der bei Axialkatalysatoren erforderliche Mantel und die bei Radialkatalysatoren erforderlichen stimseitigen Abdeckungen nicht erforderlich sind. Auch dadurch reduzieren sich die Fertigungskosten und machen die erfindungsgemäßen Katalysator-Trägerkörper besonders geeignet für die Verwendung in Abgassystemen von Kleinmotoren.

Es sei darauf hingewiesen, daß sich erfindungsgemäße Wabenkörper auch besonders einfach mit einem Washcoat und/oder einer katalytisch aktiven Beschichtung versehen lassen, da diese Beschichtung wegen der vielen verschiedenen vorhandenen Strömungswege durch Tauchen oder Berieseln aus verschiedenen Richtungen aufgebracht werden kann. Die Entfernung überschüssigen Beschichtungsmaterials kann z. B. sehr definiert und gleichmäßig durch anschließende Rotation des Katalysator-Trägerkörpers um seine Längsachse erreicht werden.

Weitere Vorteile und Anwendungsmöglichkeiten der Erfindung werden nachfolgend anhand von Ausführungsbeispielen unter Bezugnahme auf die beigefügten Zeichnungen näher erläutert. Es zeigen:
- Figur 1: eine prinzipielle Anordnung eines erfindungsgemäßen Katalysators innerhalb eines Abgasleitungsgehäuses mit Darstellung der prinzipiellen Strömungswege;
- Figur 2a): den prinzipiellen Aufbau eines Ausführungsbeipiels gemäß der Erfindung in einer Teilschnittansicht;
- Figur 2b): den Aufbau gemäß Figur 2a) in der Seitenansicht, ebenfalls als Teilschnittansicht;
- Figur 3: ein weiteres Ausführungsbeispiel der Erfindung in Form einer Wabenstruktur;
- Figur 4a): linienförmige Verbindungsstellen von hintereinander angeordneten streifenförmigen Folien;
- Figur 4b): schräg angeordnete linienförmige Verbindungsstellen von hintereinander angeordneten streifenförmigen Folien;
- Figur 4c): flächenförmige Verbindungsstellen von hintereinander angeordneten streifenförmigen Folien;
- Figur 4d): dreiecksfönnige Verbindungsstellen von hintereinander angeordneten streifenförmigen Folien;
- Figur 4e): trapezförmige Verbindungsstellen von hintereinander angeordneten streifenförmigen Folien;
- Figur 5: ein weiteres Ausführungsbeispiel gemäß der Erfindung; und
- Figur 6: noch eine weiteres Ausführungsbeispiel gemäß der Erfindung.

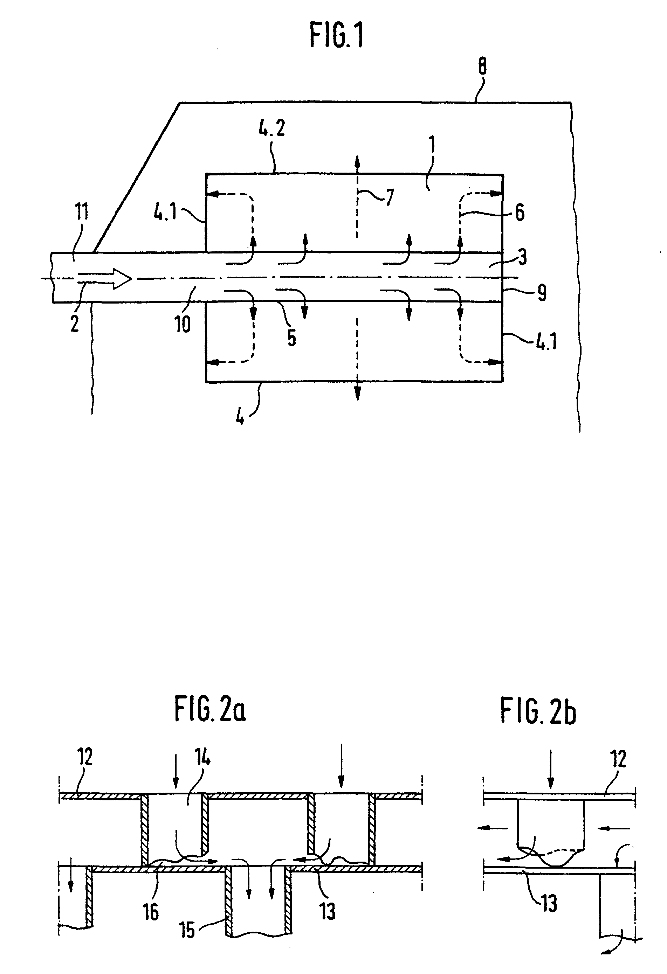

Figur 1 zeigt eine prinzipielle Darstellung der Anordnung eines Katalysators gemäß der Erfindung und der Darstellung der Strömungswege. Ein Katalysator-Trägerkörper 1 ist innerhalb eines Abgassystemgehäuses 8 so angeordnet, daß ein Abgasstrom 2 über eine Abgasleitung 11 einem inneren hohlen Bereich 3 des Trägerkörpers 1 zugeführt wird. Das bezüglich des Abgasstroms 2 stromabwärtige Ende 9 des inneren hohlen Bereichs 3 ist verschlossen, so daß der Abgasstrom 2 beim Eintritt aus dem inneren hohlen Bereich 3 in den unmittelbaren Katalysator-Trägerkörper 1 durch eine Fluideintrittsfläche 5 in radialer Richtung umgelenkt wird. Die Strömungswege innerhalb des Trägerkörpers 1 sind so angeordnet, daß der Abgasstrom 2 zunächst weiter in radialer Richtung geführt wird und anschließend ein Teilstrom 6 davon wiederum so umgelenkt wird, daß er im wesentlichen axial durch die Stirnseiten 4.1 des Trägerkörpers 1 austritt. Die Stirnseiten 4.1 sowie die äußere Mantelfläche 4.2 bilden gemeinsam eine Fluidaustrittsfläche 4. Der Teil des Abgasstromes 2, welcher nicht über die Stirnflächen 4.1 der Fluidaustrittsfläche austritt, tritt radial durch die Fluidaustrittsfläche 4.2 als Restabgasstrom 7 aus. Der Katalysator-Trägerkörper 1 weist eine Längsachse 10 auf. Der Abgasstrom 2 wird über die Abgasleitung 11 in Richtung der Längsachse 10 in das Innere 3 des Katalysator-Trägerkörpers 1 geführt. Grundsätzlich könnte die Durchströmungsrichtung auch umgekehrt gewählt werden, wenn die Einbauverhältnisse dies verlangen, wobei dann der stärkste Druckverlust allerdings beim Austritt statt beim Eintritt erfolgt.

In Figur 2 ist eine erstes Ausführungsbeispiel des Aufbaus eines Katalysator-Trägerkörpers gemäß der Erfindung dargestellt. Das dem Aufbau zugrundeliegende Prinzip des erfindungsgemäßen Katalysator-Trägerkörpers besteht darin, daß der Abgasstrom nach einer entsprechenden Umlenkung vom inneren Bereich 3 senkrecht zur Längsachse 10 in den Strömungswegen 6 strömt und Strömungsquerschnitte vorgesehen sind, welche Strömungswege 7 ermöglichen, welche koaxial zur Längsachse 10 des Katalysator-Trägerkörpers 1 gerichtet sind.

Figur 2a) ist eine Teilschnittansicht, bei welcher zwei benachbarte, um einen bestimmten Abstand zueinander angeordnete Folien 12, 13 dargestellt sind. Die Folien 12, 13 weisen entsprechende Löcher 14 auf, welche räumlich zueinander versetzt sind. Die Löcher 14 in den Folien 12, 13 sind mit an sich bekannten Verfahren so hergestellt, daß das Material der Folie 12, 13 im Bereich des Loches 14 nicht entfernt, sondern zu einem von der Folie 12, 13 abragenden Kragen 15 ausgeformt ist. Dieser Kragen 15 bildet einen im wesentlichen zylindrischen Abschnitt um den Rand des Loches 14, wobei der auf die benachbarte Folie 13 weisende Abschlußrand des kragenartigen Randes je nach Herstellungsverfahren mehr oder weniger willkürlich ausgebildet ist. Er weist einen gezackten oder gewellten Rand auf, wobei der am weitesten von der Folienoberfläche entfernte Punkt dieses Randes den Abstand zwischen den Folien 12, 13 bildet. Wegen des gezackten oder gewellten oberen Randes sind Strömungszwischenräume 16 zwischen der benachbarten Folie 13 und diesem entsprechenden oberen Rand gebildet.

Die in dem zylindrischen Kragenabschnitt strömenden Abgasteilströme können somit umgelenkt werden und die Richtung von einer Strömungsrichtung senkrecht zur Längsachse in eine Richtung koaxial dazu oder umgekehrt ändern. Dadurch ist gewährleistet, daß der Abgasstrom, welcher beim Eintritt in den Katalysator-Trägerkörper 1 insgesamt umgelenkt wird, zumindest mit einem Teilstrom 6 nach nochmaliger bzw. mehrmaliger Umlenkung in Richtung der Längsachse 10 durch die Fluidaustrittsfläche 4.1 austritt. Figur 2b) stellt eine Seitenansicht des in Figur 2a) dargestellten Ausführungsbeispiels dar, und zwar ebenfalls in einer Teilschnittansicht.

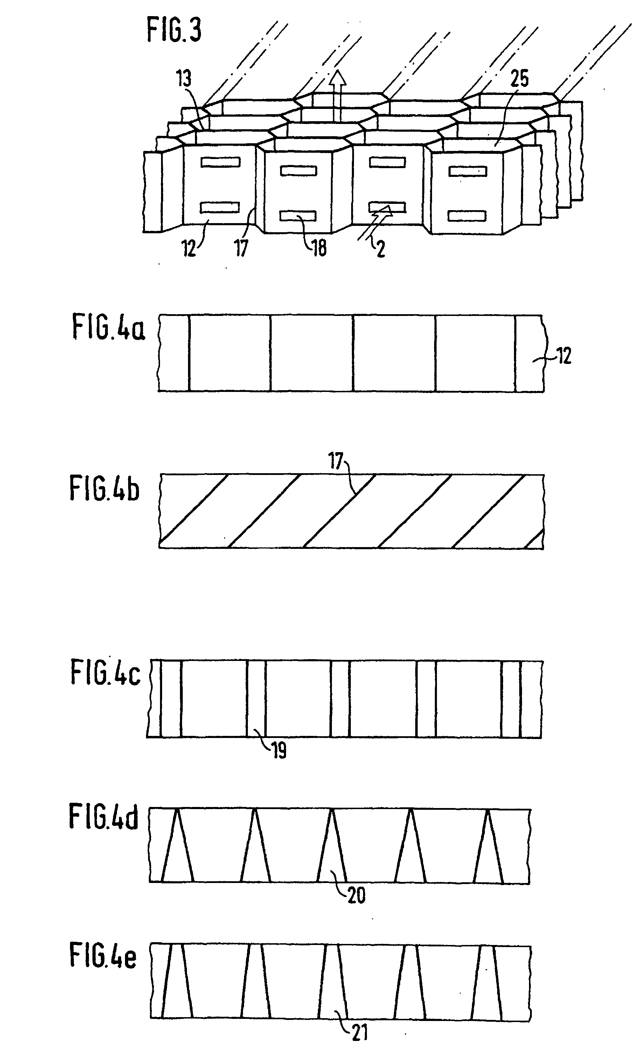

In Figur 3 ist ein weiteres Ausführungsbeispiel eines metallischen Katalysator-Trägerkörpers 1 gemäß der Erfindung dargestellt. Das Grundelement für einen derartigen Katalysator-Trägerkörper 1 ist aus einer Vielzahl von nebeneinander angeordneten streifenförmigen Folien 12, 13 aufgebaut, welche an entsprechenden Verbindungsstellen 17, 19, 20, 21 fest so miteinander verbunden sind, daß beim Strecken bzw. Auseinanderziehen dieses zunächst im wesentlichen blockartigen Elements ein flächiges Wabenstrukturelement entsteht. Einerseits stellen die einzelnen Waben des Wabenstrukturelements Strömungskanäle dar, und andererseits werden durch in den streifenartigen Folien 12, 13 vorgesehene Öffnungen, welche zu benachbarten Folien rapportgleich angeordnet sind, Strömungskanäle gebildet, welche senkrecht zu den Strömungskanälen verlaufen, welche durch die Waben des Wabenstrukturelementes gebildet werden.

Zur Herstellung eines Katalysator-Trägerkörpers 1 wird dieses zunächst flächige Wabenstrukturelement um einen Dorn gelegt, dessen Achse die Längsachse 10 des Katalysator-Trägerkörpers 1 bildet. Dadurch entstehen radial nach außen von der Längsachse 10 des Trägerkörpers 1 verlaufende, sich erweiterende Strömungskanäle, welche den Restabgasstrom 7 radial vom inneren Bereich 3 des Trägerkörpers 1 nach außen durch die Fluidaustrittsfläche 4.2 abführen. Die Wabenstruktur läßt sich auch um einen konischen Dorn legen, wobei für solche Anwendungen gegebenefalls die Form der streifenförmigen Folien und/oder der Verbindungsflächen zwischen den Folien entsprechend angepaßt werden kann.

Durch die Öffnungen 18 wird der Abgasstrom 2 umgelenkt, so daß der Teilstrom 6 des Abgasstromes 2 in eine Richtung koaxial zur Längsachse 10 des Trägerkörpers 1 umgelenkt wird. Die Öffnungen 18, welche die einzelnen Waben 25 des Wabenstrukturelementes untereinander in Querrichtung verbinden, weisen eine längliche im wesentlichen rechteckige Form auf. Es ist jedoch auch möglich, die Form der Öffnungen 18 in einer von der Rechteckform verschiedenen Form auszuführen. Gleichermaßen ist es möglich, die Ränder der Öffnung 18 mit einem kragenartigen Rand auszuführen, wie gemäß Figur 2 beschrieben, wobei derartige kragenförmige Ränder der besseren Strömungsführung in einer Richtung koaxial zur Längsachse 10 des Katalysator-Trägerkörpers 1 dienen.

In Figur 4a) ist die Vorderansicht einer streifenförmigen Folie 12 dargestellt. Die streifenförmige Folie 12 besitzt linienförmige Verbindungen 17, an welchen die Folie 12 mit der benachbarten Folie 13 mittels an sich bekannter Verfahren wie Kleben, Löten, Schweißen, vorzugsweise Ultraschallschweißen, fest verbunden ist. Gemäß Figur 4b) sind diese linienförmigen Verbindungsstellen schräg angeordnet. Die beim Auseinanderziehen des Folienpaketes entstehenden Strömungskanäle 25 weisen in einem derartigen Fall sowohl eine axiale als auch eine radiale Strömungskomponente auf.

In Figur 4c) sind die Verbindungen als rechteckige flächenförmige Verbindungsstellen 19 ausgebildet.

Da beim Aufwickeln des flächenförmigen Wabenstrukturelementes mit Verbindungsstellen 17 gemäß Figur 4a) tonnenartige Abweichungen von einer idealen Zylinderform an der äußeren Umfangsfläche des so geformten im wesentlichen rotationsymmetrischen Katalysator-Trägerkörpers 1 gebildet werden, sind gemäß Figur 4d) die Verbindungen als dreieckförmige flächenförmige Verbindungsstellen 20 ausgebildet. Dadurch wird erreicht, daß beim Aufwickeln bzw. Legen des flächenförmigen Wabenstrukturelementes gemäß Figur 3 um einen Dorn bzw. in eine im wesentlichen rotationssymmetrische Form diese rotationssymmetrische Form an der Außenfläche im wesentlichen ideal zylindrisch ist. Gemäß Figur 4e) können diese Verbindungen auch trapezförmig in Form von flächenförmigen Verbindungsstellen 21 ausgebildet sein.

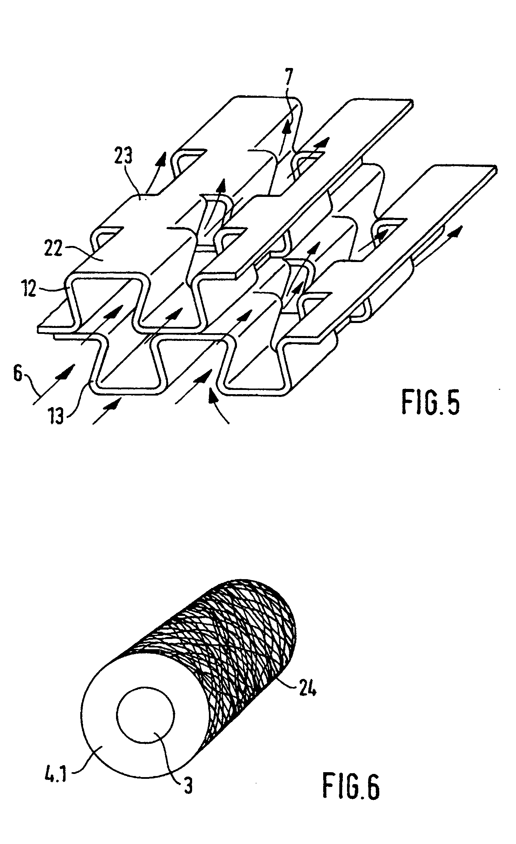

In Figur 5 ist ein weiteres Ausführungsbeispiel der Erfindung dargestellt. Das dargestellte Element repräsentiert einen Teilausschnitt, welcher den prinzipiellen Aufbau zueinander benachbart angeordneter Lagen von Folien 12, 13 wiedergibt. Die Querschnittsform der Folien ist wellenartig ausgebildet, wobei in Längsrichtung der Wellen 22 Teilbereiche 23 als Struktur seitlich zu der längs sich erstreckenden Welle 22 versetzt sind, wodurch seitliche Strömungsöffnungen gebildet werden. Wenn ein derartiges Folienpaket aufgewickelt wird, so wird bei einer radialen Anströmung der aus dem Inneren 3 des Katalysator-Trägerkörpers 1 zugeführte Abgasstrom 2 radial in den Katalysator eingerührt und wird dort wiederum als Teilstrom 6 in axialer Richtung umgeleitet, welcher somit aus der stirnseitigen Fluidaustrittsfläche 4.1 des Katalysator-Trägerkörpers 1 austreten kann. Der Restabgasstrom 7 dagegen kann in radialer Richtung, d.h. quer zur Längsachse 10 des Katalysator-Trägerkörpers 1 durch die Fluidaustrittsfläche 2 ausströmen.

Figur 6 zeigt die prinzipielle Darstellung eines zylindrisch ausgebildeten hohlen Katalysator-Trägerkörpers 1, welcher durch mehrfaches Übereinanderwickeln eines Drahtes gebildet wird, wobei beim Aufwickeln der Draht seine Aufwickelrichtung ändert. Dadurch wird ein spulenartiger Katalysator-Trägerkörper 1 gebildet, welcher stirnseitige Fluidaustrittsflächen 4.1 und einen inneren hohlen Bereich 3 aufweist. Durch die beim Aufwickeln geänderte Richtung des Drahtes 24 entstehen im Inneren eines derartigen Katalysator-Trägerkörpers Strömungswege, welche senkrecht zur Längsachse 10 dieses Katalysator-Trägerkörpers 1 und koaxial dazu ausgerichtet sind, so daß ein Teilstrom 6 des Abgasstromes 2, welcher dem Katalysator-Trägerkörper 1 zugeführt wird, in radialer Richtung beim Eintritt umgelenkt wird und zumindest ein Teilstrom des Abgasstromes nach nochmaliger Umlenkung koaxial zur Längsachse 10 durch die stirnseitige Fluidaustrittsfläche 4.1 austritt.

Vorzugsweise werden die für den Katalysator-Trägerkörper verwendeten Folien bzw. das dafür verwendete Streckmetall bzw. der dazu verwendete Draht 24 schon vor seiner Herstellung mit katalytisch aktivem Material beschichtet.

Die vorliegende Erfindung stellt einen preisgünstigen, an unterschiedliche Einbauverhältnisse leicht anpaßbaren Katalysator für das Abgas von Kleinmotoren bereit, der schädliche Bestandteile des Abgases in erheblichem Maße reduzieren kann.

### Bezugszeichenliste

- 1: Katalysator-Trägerkörper
- 2: Abgasstrom
- 3: innerer hohler Bereich
- 4: Fluidaustrittsfläche
- 4.1: Stirnseite des Katalysator-Trägerkörpers
- 4.2: äußere Mantelfläche des Katalysator-Trägerkörpers
- 5: Fluideintrittsfläche
- 6: Teilstrom, Strömungsweg
- 7: Restabgasstrom, Srömungsweg
- 8: Abgassystemgehäuse
- 9: stromabwärtiges Ende
- 10: Längsachse des Katalysator-Trägerkörpers
- 11: Abgasleitung
- 12: Folie
- 13: Folie
- 14: Loch
- 15: Kragen
- 16: Strömungszwischenraum
- 17: Verbindungsstelle, linienförmige Verbindung
- 18: Öffnung
- 19: Verbindungsstelle, rechteckige flächenförmige Verbindungsstelle
- 20: Verbindungsstelle, dreieckige flächenförmige Verbindungsstelle
- 21: Verbindungsstelle, trapezförmige flächenförmige Verbindungsstelle
- 22: Welle
- 23: versetzter Teilbereich, Struktur
- 24: Draht
- 25: Wabe, Strömungskanal

## Patentansprüche

1. Metallischer Katalysator-Trägerkörper (1) zum Reinigen eines Abgasstromes (2), insbesondere von einem Kleinmotor, mit einer Längsachse (10) und einer Vielzahl von Fluidströmungswegen (6, 7) in seinem Inneren,
wobei
die Fluidströmungswege (6, 7) so ausgebildet sind, daß der Abgasstrom (2) im Katalysator-Trägerkörper (1) beim Eintritt insgesamt so umgelenkt wird, daß er zumindest eine zu der Längsachse (10) senkrechte Komponente erhält, und zumindest ein Teilstrom (6) des Abgasstromes (2) nach nochmaliger Umlenkung mit zumindest einer Komponente in Richtung der Längsachse (10) durch eine Fluidaustrittsfläche (4) austritt,
**dadurch gekennzeichnet, daß** die Strömungswege (6, 7) so ausgebildet sind, daß der Abgasstrom mit jeweils einem Teilstrom (6) an beiden Stirnseiten (4.1) aus der Fluidaustrittsfläche (4) abströmt.

2. Metallischer Katalysator-Trägerkörper (1) nach Anspruch 1, mit einem inneren hohlen, die Längsachse (10) umgebenden Bereich (3), welcher von einer Fluideintrittsfläche (5) begrenzt ist.

3. Metallischer Katalysator-Trägerkörper (1) nach Anspruch 1 oder 2, bei welchem die Strömungswege (6, 7) so ausgebildet sind, daß der Abgasstrom nach Eintritt in die Fluideintrittsfläche radial nach außen und zumindest ein Teilstrom (6) davon anschließend axial stirnseitig durch die Fluidaustrittsfläche (4) abströmt.

4. Metallischer Katalysator-Trägerkörper (1) nach Anspruch 3, bei welchem die Strömungswege (6, 7) so ausgebildet sind, daß der sich aus der Differenz von Abgasstrom (2) und axial abströmendem Teilstrom (6) ergebende Restabgasstrom (7) radial aus der Fluidaustrittsfläche (4) abströmt.

5. Metallischer Katalysator-Trägerkörper (1) nach einem der Ansprüche 1 bis 4, welcher Folien (12, 13) mit einer Vielzahl von Löchern (14) aufweist, deren Ränder (15) kragenartig ausgeformt sind.

6. Metallischer Katalysator-Trägerkörper (1) nach Anspruch 5, bei welchem die Ränder (15) bei übereinandergelegten Folien (12, 13) Distanzhalter bilden, deren von der Folie (12) wegweisender Rand (15) so ausgebildet ist, daß bei übereinandergelegten Folien (12, 13) zwischen Rand (15) und darübergelegter Folie (13) Strömungszwischenräume (16) gebildet sind.

7. Metallischer Katalysator-Trägerkörper (1) nach einem der Ansprüche 1 bis 4 mit Öffnungen (18) aufweisenden Folien (12, 13), welche streifenförmig ausgebildet sind und an voneinander beabstandeten Verbindungsstellen (17, 19, 20, 21) fest miteinander verbunden sind, so daß sich beim Strecken eine Wabenstruktur ergibt, welche Strömungskanäle (18, 25) mit radialen und axialen Strömungsrichtungskomponenten aufweist, wobei die Verbindungsstellen hintereinander angeordneter Folien (12, 13) alternierend zueinander versetzt sind.

8. Metallischer Katalysator-Trägerkörper (1) nach Anspruch 7, bei welchem die Verbindungsstellen (17) über die Breite der Folie (12) linienförmig ausgebildet sind.

9. Metallischer Katalysator-Trägerkörper (1) nach Anspruch 8, bei welchem die Verbindungsstellen (17) über die Breite der Folie (12) schräg verlaufen.

10. Metallischer Katalysator-Trägerkörper (1) nach Anspruch 7, bei welchem die Verbindungsstellen (19, 20, 21) flächenförmig ausgebildet sind.

11. Metallischer Katalysator-Trägerkörper (1) nach Anspruch 10, bei welchem die Verbindungsstellen im wesentlichen dreiecksförmig (20) oder trapezförmig (21) ausgebildet sind.

12. Metallischer Katalysator-Trägerkörper (1) nach einem der Ansprüche 7 bis 11, bei welchem die Verbindungsstellen (17, 19, 20, 21) der Folien (12, 13) geklebt, gelötet oder geschweißt, vorzugsweise ultraschall-geschweißt sind.

13. Metallischer Katalysator-Trägerkörper (1) nach einem der Ansprüche 1 bis 4, mit zumindest einer mit Wellen (22) versehenen Folie (12). welche ein Vielzahl von aus den Wellen (22) vorstehenden Strukturen (23) aufweist, die sich im wesentlichen in Richtung der Längsachse (10) erstrecken und senkrecht dazu Durchströmquerschnitte bilden.

14. Metallischer Katalysator-Trägerkörper (1) nach Anspruch 13, bei welchem die Strukturen (23) regelmäßig angeordnet und zueinander versetzt ausgebildet sind.

15. Metallischer Katalysator-Trägerkörper (1) nach einem der Ansprüche 1 bis 4, welcher Streckmetall aufweist, das zur Bildung einer paketartigen Struktur mehrfach übereinandergelegt ist.

16. Metallischer Katalysator-Trägerkörper (1) nach einem der Ansprüche 1 bis 4, welcher Draht (24) aufweist, der zur Bildung einer paketartigen Struktur mit wechselnder Richtungsänderung übereinandergelegt ist.

17. Metallischer Katalysator-Trägerkörper (1) nach Anspruch 16, bei welchem der Draht (24) im wesentlichen regelmäßig übereinandergelegt ist.

18. Metallischer Katalysator-Trägerkörper (1) nach Anspruch 16 oder 17, bei welchem die paketartige Struktur als Knäul ausgebildet ist.

19. Metallischer Katalysator-Trägerkörper nach einem der Ansprüche 1 bis 18, welcher als zylindrischer Hohlkörper ausgebildet ist, dessen Fluideintrittsfläche (5) die Innenoberfläche des Hohlkörpers ist und dessen nuidaustrittsfläcbe (4) zumindest die Stirnseiten (4.1) des Hohlkörpers umfaßt.

## Claims

1. A metallic catalyst carrier body (1) for the purification of an exhaust gas flow (2), in particular from a small engine, having a longitudinal axis (10) and a plurality of fluid flow paths (6,7) in its interior, wherein the fluid flow paths (6, 7) are such that the exhaust gas flow (2) is overall so deflected in the catalyst carrier body (1) upon intake thereof that it obtains at least one component which is oriented perpendicularly to the longitudinal axis (10), and at least a flow portion (6) of the exhaust gas flow (2) after being deflected once again issues with at least one component in the direction of the longitudinal axis (10) through a fluid outlet surface (4), **characterized in, that** the flow paths (6, 7) are of such a configuration that the exhaust gas flow flows away with a respective flow portion (6) at both end faces (4.1) from the fluid outlet surface (4).

2. A metallic catalyst carrier body (1) according to claim 1, having an inner hollow region (3) which surrounds the longitudinal axis (10) and which is defined by a fluid intake surface (5).

3. A metallic catalyst carrier body (1) according to claim 1 or claim 2, wherein the flow paths (6, 7) are of such a configuration that the exhaust gas flow after passing into the fluid intake surface flows away radially outwardly and at least a flow portion (6) thereof then flows away axially through the end face through the fluid outlet surface (4).

4. A metallic catalyst carrier body (1) according to claim 3, wherein the flow paths (6, 7) are of such a configuration that the residual exhaust gas flow (7) resulting from the difference between the exhaust gas flow (2) and the flow portion (6) which flows away axially flows away radially out of the flow outlet surface (4).

5. A metallic catalyst carrier body (1) according to one of claims 1 to 4, which has foils (12, 13) with a plurality of holes (14) whose edges (15) are shaped in a collar-like configuration.

6. A metallic catalyst carrier body (1) according to claim 5, wherein where foils (12, 13) are disposed in mutually superposed relationship the edges (15) form spacers whose edges (15) facing away from the foil or sheet (12) are of such a configuration that when foils (12, 13) are disposed in mutually superposed relationship intermediate flow spaces (16) are formed between the edge (15) and the foil (13) disposed thereabove.

7. A metallic catalyst carrier body (1) according to one of claims 1 to 4 with foils (12, 13) which have openings (18) and which are of a strip configuration and which are fixedly connected together at spaced-apart connecting locations (17, 19, 20, 21),so that upon stretching the result is a honeycomb structure which has flow passages (18, 25) with radial and axial flow direction components, wherein the connecting locations of foils (12, 13) being arranged one behind the other are in alternately mutually displaced relationship.

8. A metallic catalyst carrier body (1) according to claim 7, wherein the connecting locations (17) are of a line configuration over the width of the foil (12).

9. A metallic catalyst carrier body (1) according to claim 8, wherein the connecting locations (17) extend inclinedly over the width of the foil (12).

10. A metallic catalyst carrier body (1) according to claim 7, wherein the connecting locations (19, 20, 21) are of an areal configuration.

11. A metallic catalyst carrier body (1) according to claim 10, wherein the connecting locations are of a substantially triangular configuration (20) or a substantially trapezoidal configuration (21).

12. A metallic catalyst carrier body (1) according to one of claims 7 to 11 wherein the connecting locations (17, 19, 20, 21) of the foils (12, 13) are glued, brazed or welded, preferably ultrasonic welded.

13. A metallic catalyst carrier body (1) according to one of claims 1 to 4 with at least one foil (12) which is provided with corrugations (22) and which has a plurality of structures (23) which project out of the corrugations (22) and which extend substantially in the direction of the longitudinal axis (10) and which form through-flow cross-sections in perpendicular relationship therewith.

14. A metallic catalyst carrier body (1) according to claim 13, wherein the structures (23) are arranged regularly and are of a mutually displaced configuration.

15. A metallic catalyst carrier body (1) according to one of claims 1 to 4, which has expanded metal which is disposed in mutually superposed relationship a plurality of times to form a pack-like structure.

16. A metallic catalyst carrier body (1) according to one of claims 1 to 4 which has wire (24) which is disposed in mutually superposed relationship with alternate changes in direction to form a pack-like structure.

17. A metallic catalyst carrier body (1) according to claim 16 in which the wire (24) is disposed in mutually superposed relationship substantially regularly.

18. A metallic catalyst carrier body (1) according to claim 16 or claim 17 wherein the pack-like structure is in the form of a clew.

19. A metallic catalyst carrier body (1) according to one of claims 1 to 18, which is in the form of a cylindrical hollow body whose fluid intake surface (5) is the inside surface of the hollow body and whose fluid outlet surface (4) includes at least the end faces (4.1) of the hollow body.

## Revendications

1. Corps support de catalyseur métallique (1) pour l'épuration d'un flux de gaz d'échappement (2), notamment d'un petit moteur, avec un axe longitudinal (10) et avec une multiplicité de trajectoires d'écoulement de fluide (6, 7) dans son intérieur, dans quel cas les trajectoires d'écoulement de fluide (6, 7) sont réalisées de telle manière qu'à l'entrée le flux de gaz d'échappement (2) est dévié dans l'ensemble dans le corps support de catalyseur (1) de telle manière qu'il obtient au moins une composante étant perpendiculaire par rapport à l'axe longitudinal (10), et au moins un flux partiel (6) du flux de gaz d'échappement (2) sort par une surface de sortie de fluide (4) après avoir été dévié encore une fois avec au moins une composante en direction de l'axe longitudinal (10), **caractérisé en ce que** les trajectoires d'écoulement (6, 7) sont réalisées de telle manière que le flux de gaz d'échappement s'écoule avec respectivement un flux partiel (6) de la surface de sortie de fluide (4) sur les deux faces frontales (4.1).

2. Corps support de catalyseur métallique (1) selon la revendication 1 comportant une zone intérieure creuse (3), entourant l'axe longitudinal (10) et qui est limitée par une surface d'entrée de fluide (5).

3. Corps support de catalyseur métallique (1) selon la revendication 1 ou 2, dans le cas duquel les trajectoires d'écoulement (6, 7) sont réalisées de telle manière qu'après l'entrée dans la surface d'entre de fluide le flux de gaz d'échappement s'écoule radialement vers l'extérieur et au moins un flux partiel (6) du flux de gaz d'échappement s'écoule ensuite de manière axiale-frontale par la surface de sortie de fluide (4).

4. Corps support de catalyseur métallique (1) selon la revendication 3, dans le cas duquel les trajectoires d'écoulement (6, 7) sont réalisées de telle manière que le flux de gaz d'échappement restant (7) donné par la différence entre le flux de gaz d'échappement (2) et le flux partiel (6) qui s'écoule axialement, s'écoule radialement de la surface de sortie de fluide (4).

5. Corps support de catalyseur métallique (1) selon l'une des revendications 1 à 4 qui présente des feuilles (12, 13) comportant une multiplicité de trous (14), dont les bords (15) sont formés à la façon d'un col.

6. Corps support de catalyseur métallique (1) selon la revendication 5, dans le cas duquel, quand il s'agit de feuilles superposées (12, 13), les bords (15) forment des écarteurs dont le bord (15) étant détourné de la feuille (12) est réalisé de telle façon que dans le cas de feuilles superposées (12, 13) des espacements d'écoulement (16) sont formés entre le bord (15) et la feuille déposée au-dessus.

7. Corps support de catalyseur métallique (1) selon l'une des revendications 1 à 4 comportant des feuilles (12, 13) présentant des ouvertures (18), les feuilles (12, 13) étant réalisées en forme de bandes et étant reliées solidement les unes aux autres à des endroits de liaison (17, 19, 20, 21), de sorte que lors de l'étirage une structure de nids d'abeilles se forme qui présente des canaux d'écoulement (18, 25) avec des composantes de direction d'écoulement radiales et axiales, les endroits de liaison de feuilles (12, 13), qui sont agencées l'une derrière l'autre, étant décalés en alternance l'un par rapport à l'autre.

8. Corps support de catalyseur métallique (1) selon la revendication 7, dans le cas duquel les endroits de liaison (17) sont réalisés en forme de ligne sur la largeur de la feuille (12).

9. Corps support de catalyseur métallique (1) selon la revendication 8, dans le cas duquel les endroits de liaison (17) s'étendent obliquement sur la largeur de la feuille (12).

10. Corps support de catalyseur métallique (1) selon la revendication 7, dans le cas duquel les endroits de liaison (19, 20, 21) ont une configuration en forme d'aire.

11. Corps support de catalyseur métallique (1) selon la revendication 10, dans le cas duquel les endroits de liaison ont une forme sensiblement triangulaire (20) ou trapézoïdale (21).

12. Corps support de catalyseur métallique (1) selon l'une des revendications 7 à 11, dans le cas duquel les endroits de liaison (17, 19, 20, 21) des feuilles (12, 13) sont collés, brasés ou soudés, de préférence soudés par ultrasons.

13. Corps support de catalyseur métallique (1) selon l'une des revendications 1 à 4, comportant au moins une feuille (12) pourvue d'ondulations (22), la feuille (12) présentant une multiplicité de structures (23) dépassant les ondulations (22) et s'étendant sensiblement en direction de l'axe longitudinal (10) et formant perpendiculairement à celui-ci des sections transversales d'écoulement.

14. Corps support de catalyseur métallique (1) selon la revendication 13, dans le cas duquel les structures (23) sont agencées régulièrement et sont réalisées de manière décalée l'une par rapport à l'autre.

15. Corps support de catalyseur métallique (1) selon l'une des revendications 1 à 4, qui présente du métal déployé, qui pour la formation d'une structure à la façon d'un paquet est superposé à plusieurs reprises.

16. Corps support de catalyseur métallique (1) selon l'une des revendications 1 à 4, qui présente du fil métallique (24) qui pour la formation d'une structure à la façon d'un paquet est superposé avec changement de direction alterné.

17. Corps support de catalyseur métallique (1) selon la revendication 16, dans le cas duquel le fil métallique (24) est superposé sensiblement de manière régulière.

18. Corps support de catalyseur métalliqúe (1) selon la revendication 16 ou 17, dans le cas duquel la structure à la façon d'un paquet est formée en tant que pelote.

19. Corps support de catalyseur métallique selon l'une des revendications 1 à 18, qui est réalisé en tant que corps creux cylindrique dont la surface d'entrée de fluide (5) est la surface intérieure du corps creux et dont la surface de sortie de fluide (4) comporte au moins les faces frontales (4.1) du corps creux.
